# EUROPÄISCHE PATENTSCHRIFT

(11) **EP 3 475 143 B1**
(45) Veröffentlichungstag und Bekanntmachung des Hinweises auf die Patenterteilung: **25.08.2021**
(21) Anmeldenummer: 17743000.6
(22) Anmeldetag: 17.07.2017
(51) Int. Cl.: B61L 23/00, H04L 29/06, H04Q 9/00, B61L 27/00, H04B 1/3822, H04L 12/24

(54) **ANORDNUNG MIT EINER SICHERUNGSTECHNISCHEN ANLAGE SOWIE VERFAHREN ZU DEREN GESCHÜTZTEM BETRIEB MITTELS FERNABFRAGE**
ARRANGEMENT HAVING A SAFETY-RELATED SYSTEM AND METHOD FOR THE PROTECTED OPERATION THEREOF BY MEANS OF A REMOTE QUERY
DISPOSITIF COMPORTANT UNE INSTALLATION TECHNIQUE DE SÉCURITÉ ET PROCÉDÉ POUR SON FONCTIONNEMENT SÉCURISÉ AU MOYEN D'UNE INTERROGATION À DISTANCE

(30) Priorität: 16.08.2016 DE 102016215243
(43) Veröffentlichungstag der Anmeldung: 01.05.2019
(73) Patentinhaber: Siemens Mobility GmbH, 81739 München (DE)
(72) Erfinder: KOTT, Jürgen, 38259 Salzgitter (DE); RENPENNING, Frank, 38118 Braunschweig (DE)
(86) Internationale Anmeldenummer: PCT/EP2017/067967
(87) Internationale Veröffentlichungsnummer: WO 2018/033318

(56) Entgegenhaltungen:
- EP-A2- 0 909 692
- EP-A2- 0 997 807
- DE-A1-102013 217 324
- DE-A1-102013 226 171
- US-A1- 2005 091 515

## Beschreibung

Die Erfindung bezieht sich auf eine Anordnung mit einer technischen Anlage, insbesondere einer sicherungstechnischen Anlage, und einer die Anlage steuernden Steuereinrichtung, die mittels Steuerbefehlen den technischen Zustand der Anlage verändern kann.

Das Verfahren in Dokument EP 0 909 692 A2 beschreibt das Sichern von Datenprozessoranordnungen gegen unbeabsichtigtes und unzulässiges Einwirken von anderen Datennetzen, mit denen die Datenprozessoren über Kommunikationsdienste verbunden sind. Mit einer Filterfunktion werden alle Meldungen gelöscht, die hinsichtlich ihrer Sicherheit als nicht eindeutig erkannt werden. Die über die Kommunikationsdienste gelieferten Datennachrichten werden in mindestens zwei in Reihe geschalteten unabhängigen Beobachtungseinheiten gefiltert, die dem sicherheitsrelevanten Datenprozessor vorgeschaltet sind. Die Nachrichten werden in einer ersten Beobachtungseinheit codiert und in der in Datenübertragungsrichtung folgenden zweiten Beobachtungseinheit erneut decodiert. Testdaten werden zumindest indirekt durch in beiden Beobachtungseinheiten implementierte Programme und notwendige unveränderbare Daten gebildet und mit den in den Beobachtungseinheiten gespeicherten Referenzdaten und / oder Test- und / oder Referenzdaten, die von der Partnerbeobachtungseinheit stammen, verglichen. Wird ein Test nicht innerhalb einer definierten Crasherkennungszeit erfolgreich abgeschlossen, wird die Beobachtungseinheit, die den Crash erkannt hat, irreversibel abgeschaltet.

Dokument DE 102013226171 A1 offenbart ein Verfahren und eine Vorrichtung zum Übertragen von Daten von einem Sender in einem ersten Kommunikationsnetz zu einem Empfänger in einem zweiten sicherheitskritischen Anwendungsnetz und umfasst eine Eingangspuffereinheit, eine Ausgangspuffereinheit, eine Warteeinheit und eine Testeinheit. Die Eingangspuffereinheit liefert die zu übertragenden Daten. Die Warteeinheit erfasst eine Eingabezeit für die zu übertragenden Daten, ermittelt eine Verweilzeit für die Daten und speichert die zu übertragenden Daten und / oder einen Prüfwert für die zu übertragenden Daten. Die Testeinheit ist dazu ausgebildet, die nach Ablauf der Verweilzeit zu übertragenden Daten mit einem nach Ablauf der Verweilzeit aktuellen Testmuster zu testen. Die Ausgabepuffereinheit ist dafür ausgelegt, die Daten für den Empfänger bereitzustellen, wenn die Daten während der Prüfung als unkritisch angesehen wurden. Das Testmuster bezieht sich vorzugsweise auf ein Virusmuster.

Es werden ein System und ein Verfahren zum Bereitstellen eines kontrollierten Zugriffs über ein externes Netzwerk auf eine Ressource in Dokument US 2005091515 A1 offenbart, die sich in einem internen Netzwerk befindet. Eine externe Anfrage, die an ein erstes Computersystem gerichtet ist, das dem internen Netzwerk zugeordnet ist, wird über das externe Netzwerk an dem ersten Computersystem empfangen. Die externe Anforderung umfasst eine Anforderung von einer anfordernden Partei nach Antwortdaten von einem zweiten Computersystem, das dem internen Netzwerk zugeordnet ist. Zumindest ein Teil des Inhalts der externen Anforderung wird auf dem ersten Computersystem analysiert, um festzustellen, ob die Anforderung autorisiert ist. Wenn festgestellt wird, dass die Anforderung autorisiert ist, wird die Anforderung verarbeitet.

Das Dokument DE 102013217324 A1 betrifft ein Verfahren zur Systemdiagnose in einem sicherheitstechnischen System, insbesondere Eisenbahnsicherungssystem, mit mehreren Systemkomponenten mit hohem Integritätslevel und mindestens einer Diagnosekomponente mit niedrigem Integritätslevel sowie eine diesbezügliche Systemkonfiguration. Um Diagnosedaten mit möglichst geringer Beanspruchung systeminterner Kommunikations-und Datenressourcen zu gewinnen, ist erfindungsgemäß vorgesehen, dass von der Diagnosekomponente Diagnoseanfragen über mindestens ein Diagnoseinterface in das System eingegeben und zwischen Systemkomponenten als Nutzlast in Lebenstakttelegrammen bis zu einer empfangenden Systemkomponente weitergeleitet werden und dass die angefragten Diagnosedaten von der empfangenden Systemkomponente an die Diagnosekomponente ausgegeben werden.

Das Verfahren aus Dokument EP 0997807 A2 umfasst die Bereitstellung öffentlicher und geheimer Schlüssel für jedes Subsystem. Das Subsystem bestimmt eine Zertifizierungsinstanz, eine offizielle Stelle, um die Zugehörigkeit des Schlüssels zum Subsystem mit einem Zertifikat zu zertifizieren. Jedes Subsystem erhält von der Zertifizierungsstelle ein Schlüsselzertifikat und ein Zertifikat. Jede Person, die an der Produktion und dem Testen von Produktsoftware beteiligt ist, unterzeichnet die Produktsoftware und leitet die aktuelle Signatur mit dem geheimen Schlüssel zusammen mit ihrem eigenen Schlüsselzertifikat weiter. Die Zertifizierungsstelle erstellt für jeden Benutzer eine Testerliste und signiert diese. Der Zielcomputer akzeptiert und beendet die Produktsoftware, die verkettete Liste der Signaturen und die Liste der Schlüsselzertifikate der Teilnehmer und die Testerliste.

Der Erfindung liegt die Aufgabe zugrunde, eine Anordnung anzugeben, die ein Abfragen von Daten aus der Steuereinrichtung mittels einer externen Fernabfrageeinrichtung ermöglicht, jedoch eine Manipulation der Steuereinrichtung von außen in zuverlässiger Weise verhindert und insbesondere auch eine Überprüfung des Abfragebefehls selbst ermöglicht.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass an die Steuereinrichtung eine Schnittstelleneinrichtung angeschlossen ist, die eine externe Schnittstelle zum Anschluss an eine externe Fernabfrageeinrichtung bildet, wobei die Schnittstelleneinrichtung eine Prüfeinrichtung aufweist, die derart ausgestaltet ist, dass sie ein empfangenes Fernabfragesignal auf das Vorliegen eines in der Schnittstelleneinrichtung als zulässig abgespeicherten Abfragebefehls prüft und im Falle der Zulässigkeit allein den Abfragebefehl an die Steuereinrichtung weiterleitet und das Weiterleiten des Fernabfragesignals als solches oder aller anderen Steuerbefehle, die keine als zulässig abgespeicherten Abfragebefehle sind, blockiert.

Ein wesentlicher Vorteil der erfindungsgemäßen Anordnung ist darin zu sehen, dass die Schnittstelleneinrichtung eine Fernabfrage von Anlagendaten aus der Steuereinrichtung und damit der technischen Anlage insgesamt ermöglicht, ohne dabei die Sicherheit des Betriebs der technischen Anlage zu gefährden; denn die Schnittstelleneinrichtung unterbindet ein unmittelbares Einspeisen von Steuersignalen oder Steuerbefehlen in die Steuereinrichtung bzw. die technische Anlage. Erfindungsgemäß erfolgt nach Empfang eines Fernabfragesignals zunächst eine Überprüfung auf das Vorliegen eines als zulässig abgespeicherten Abfragebefehls und - nur falls ein solcher von der Schnittstelleneinrichtung erkannt wurde - eine mittelbare Weitergabe allein des jeweiligen Abfragebefehls an die Steuereinrichtung. Ein Fernabfragesignal als solches erreicht die Steuereinrichtung also nicht.

Insbesondere auf dem Gebiet der Eisenbahntechnik müssen hohe Sicherheitsanforderungen erfüllt werden; demgemäß wird es als vorteilhaft angesehen, wenn die sicherungstechnische Anlage eine Eisenbahnanlage ist und die Steuerbefehle, die den technischen Zustand der Anlage verändern würden, solche sind, die den Betriebszustand der Eisenbahnanlage verändern würden.

Mit Blick auf eine besonders gute Entkopplung zwischen der Steuereinrichtung und der externen Fernabfrageeinrichtung wird es als vorteilhaft angesehen, wenn die Schnittstelleneinrichtung zwei- oder mehrstufig ist und zwei oder mehr Schnittstellenmodule aufweist, die über Schnittstellen kaskadiert hintereinander geschaltet sind, wobei zwischen zumindest zweien der Schnittstellenmodule eine Signalübertragung mit einem anderen Übertragungsstandard oder auf der Basis eines anderen Paketprotokolls erfolgt als die Kommunikation zwischen der Schnittstelleneinrichtung und der Fernabfrageeinrichtung.

Vorteilhaft ist es, wenn das in der Kaskade erste Schnittstellenmodul, das mit der externen Fernabfrageeinrichtung in Verbindung steht, derart ausgestaltet ist, dass es bei Vorliegen eines Fernabfragesignals, das einen als zulässig erkannten Abfragebefehl erhält, ausschließlich den Abfragebefehl an das in der Kaskade nächste Schnittstellenmodul weiterleitet, und zwar unter Paketprotokolländerung oder auf der Basis einer paketfreien Signalübertragung (also unter völligen Wegfalls eines Paketprotokolls).

Bei einer als besonders vorteilhaft angesehenen Ausgestaltung der Anordnung ist vorgesehen, dass die Schnittstelleneinrichtung ein internes Schnittstellenmodul und ein externes Schnittstellenmodul aufweist, die jeweils eine interne Schnittstelle und eine externe Schnittstelle aufweisen, das interne Schnittstellenmodul mittels seiner internen Schnittstelle - nachfolgend erste Schnittstelle genannt - mit der Steuereinrichtung und mittels seiner externen Schnittstelle - nachfolgend zweite Schnittstelle genannt - mit einem vorgeordneten Schnittstellenmodul der Modulkaskade, im Falle zweier Schnittstellenmodule dem externen Schnittstellenmodul, verbunden ist, das externe Schnittstellenmodul mittels seiner internen Schnittstelle - nachfolgend dritte Schnittstelle genannt - mit der Schnittstelle eines nachgeordneten Schnittstellenmoduls, im Falle zweier Schnittstellenmodule mit dem internen Schnittstellenmodul, verbunden ist, und mittels seiner externen Schnittstelle - nachfolgend vierte Schnittstelle genannt - mit der Fernabfrageeinrichtung verbindbar ist, und die Prüfeinrichtung in dem externen Schnittstellenmodul enthalten ist.

Die Prüfeinrichtung ist vorzugsweise in dem externen Schnittstellenmodul enthalten.

Mit Blick auf eine wirkungsvolle Entkopplung zwischen der Steuereinrichtung und der externen Abfrageeinrichtung wird es als vorteilhaft angesehen, wenn die vierte Schnittstelle eine paketorientierte Schnittstelle ist, die eine protokollbasierte Kommunikation mit der Fernabfrageeinrichtung auf der Basis eines vorgegebenen externen Paketprotokolls durchführt, und die Datenübertragung zwischen zumindest zweien der Schnittstellenmodule, im Falle zweier Schnittstellenmodule zwischen der zweiten und dritten Schnittstelle, auf einer internen paketfreien Signalübertragung basiert oder auf einem internen Paketprotokoll beruht, das sich von dem externen Paketprotokoll unterscheidet.

Das interne Schnittstellenmodul ist vorzugsweise derart ausgestaltet, dass es - bei Vorliegen eines Abfragebefehls an seiner zweiten Schnittstelle - den Abfragebefehl an die erste Schnittstelle und damit an die Steuereinrichtung weiterleitet, und zwar auf der Basis eines dritten Paketprotokolls, das sich von dem internen Paketprotokoll und/oder dem externen Paketprotokoll unterscheidet, oder auf der Basis einer paketfreien Signalübertragung, die sich von der internen paketfreien Signalübertragung unterscheidet.

Die Steuereinrichtung kann bei Vorliegen eines Abfragebefehls die angefragten Daten über die Schnittstelleneinrichtung an die externe Fernabfrageeinrichtung übermitteln.

Bei einer besonders bevorzugten Variante ist vorgesehen, dass parallel zu zumindest dem in der Kaskade - von der Fernabfrageeinrichtung aus gesehen - letzten Schnittstellenmodul, also demjenigen, das mit der Steuereinrichtung in Verbindung steht, - insbesondere dem internen Schnittstellenmodul im Falle von zwei Schnittstellenmodulen - oder parallel zu der Schnittstelleneinrichtung insgesamt eine Datendiode geschaltet ist und die Steuereinrichtung bei Vorliegen eines Abfragebefehls die angefragten Daten über die Datendiode und damit an dem mit der Steuereinrichtung verbundenen Schnittstellenmodul , - insbesondere dem internen Schnittstellenmodul im Falle von zwei Schnittstellenmodulen - oder an der Schnittstelleneinrichtung insgesamt vorbei an die externe Fernabfrageeinrichtung übermittelt. Durch ein Vorbeileiten der Daten an der Schnittstelleneinrichtung insgesamt oder an zumindest einem der Schnittstellenmodule lässt sich in vorteilhafter Weise eine hohe Übertragungsrate der Daten erreichen, weil kommerziell erhältliche Datendioden üblicherweise für hohe Übertragungsraten ausgelegt sind.

Mit Blick auf eine Durchführung von Updates aus der Ferne wird es als vorteilhaft angesehen, wenn die Schnittstelleneinrichtung einen Signaturspeicher zur Abspeicherung einer oder mehrerer als gültig angesehener Signaturen aufweist, und die Schnittstelleneinrichtung derart ausgestaltet ist, dass sie ein an ihrer externen Schnittstelle empfangenes Softwareupdate auf das Vorliegen einer oder mehrerer als gültig abgespeicherter Signaturen prüft, bei erfolgreicher Signaturprüfung das Softwareupdate ausführt und bei erfolgloser Signaturprüfung die Ausführung des Softwareupdates unterlässt.

Die Erfindung bezieht sich darüber hinaus auf ein Verfahren zum Betreiben einer Anordnung, die eine technische Anlage, insbesondere sicherungstechnische Anlage, und eine die Anlage steuernde Steuereinrichtung, die mittels Steuerbefehlen den technischen Zustand der Anlage verändern kann, aufweist.

Bezüglich eines solchen Verfahrens ist erfindungsgemäß vorgesehen, dass mittels einer externen Fernabfrageeinrichtung ein Fernabfragesignal an eine der Steuereinrichtung vorgeordnete Schnittstelleneinrichtung gesendet wird, die Schnittstelleneinrichtung prüft, ob das Fernabfragesignal einen in der Schnittstelleneinrichtung als zulässig abgespeicherten Abfragebefehl zur Abfrage von Anlagendaten enthält, falls ein als zulässig abgespeicherter Abfragebefehl im Fernabfragesignal enthalten ist, dieser Abfragebefehl an die Steuereinrichtung weitergeleitet wird und andernfalls eine Weiterleitung unterbleibt, und im Falle eines zulässigen Abfragebefehls die angefragten Daten an die externen Fernabfrageeinrichtung übermittelt werden.

Bezüglich der Vorteile des erfindungsgemäßen Verfahrens sei auf die obigen Ausführungen im Zusammenhang mit der erfindungsgemäßen Anordnung verwiesen.

Vorteilhaft ist es, wenn vor der Weiterleitung des Abfragebefehls an die Steuereinrichtung dieser von einem externen Schnittstellenmodul der Schnittstelleneinrichtung zunächst an ein internes Schnittstellenmodul der Schnittstelleneinrichtung übermittelt wird, und zwar unter Paketprotokolländerung oder auf der Basis einer paketfreien Signalübertragung und der Abfragebefehl von dem internen Schnittstellenmodul der Schnittstelleneinrichtung an die Steuereinrichtung weitergeleitet wird.

Das interne Schnittstellenmodul führt das Weiterleiten des Abfragebefehls an die Steuereinrichtung vorzugsweise auf der Basis eines dritten Paketprotokolls durch, das sich von dem internen Paketprotokoll und/oder dem externen Paketprotokoll unterscheidet, oder auf der Basis einer paketfreien Signalübertragung, die sich von der internen paketfreien Signalübertragung unterscheidet.

Auch ist es vorteilhaft, wenn parallel zu zumindest dem in der Kaskade - von der Fernabfrageeinrichtung aus gesehen - letzten Schnittstellenmodul, also demjenigen, das mit der Steuereinrichtung in Verbindung steht, - insbesondere also dem internen Schnittstellenmodul im Falle von zwei Schnittstellenmodulen -, oder parallel zu der Schnittstelleneinrichtung insgesamt eine Datendiode geschaltet ist und die Datendiode derart gepolt ist, dass Daten in Richtung der externen Fernabfrageeinrichtung gesendet werden können, und bei Vorliegen eines Abfragebefehls die angefragten Daten über die Datendiode und damit an dem mit der Steuereinrichtung verbundenen Schnittstellenmodul - insbesondere dem internen Schnittstellenmodul im Falle von zwei Schnittstellenmodulen - oder an der Schnittstelleneinrichtung insgesamt vorbei an die externe Fernabfrageeinrichtung übermittelt werden.

Zur Durchführung eines Softwareupdates wird vorzugsweise eine Softwareupdatedatei signiert, und zwar auf der Basis einer oder mehrerer in der Schnittstelleneinrichtung als gültig abgespeicherter Signaturen. Die signierte Softwareupdatedatei wird vorzugsweise an die Schnittstelleneinrichtung übertragen, die die Softwareupdatedatei auf das Vorliegen einer oder mehrerer als gültig abgespeicherter Signaturen prüft. Bei erfolgreicher Signaturprüfung wird das in der Softwareupdatedatei enthaltene Softwareupdate ausgeführt und bei erfolgloser Signaturprüfung wird die Ausführung des Softwareupdates unterlassen.

Die Erfindung wird nachfolgend anhand von Ausführungsbeispielen näher erläutert; dabei zeigen beispielhaft
- Figur 1: ein Ausführungsbeispiel für eine Anordnung mit einer technischen Anlage und einer die Anlage steuernden Steuereinrichtung, wobei zum Zwecke einer Fernabfrage die Steuereinrichtung mit einer Schnittstelleneinrichtung in Verbindung steht,
- Figur 2: ein Ausführungsbeispiel für eine Anordnung, bei der parallel zur Schnittstelleneinrichtung eine Datendiode parallelgeschaltet ist,
- Figur 3: ein Ausführungsbeispiel für eine Anordnung, bei der eine Schnittstelleneinrichtung einen Signaturspeicher zur Speicherung von Signaturen aufweist,
- Figur 4: ein Ausführungsbeispiel für eine Anordnung, bei der eine Schnittstelleneinrichtung durch eine Kaskade hintereinander geschalteter Schnittstellenmodule gebildet ist,
- Figur 5: ein Ausführungsbeispiel für eine Anordnung, bei der eine Schnittstelleneinrichtung eine Kaskade von Schnittstellenmodulen aufweist und zu der Kaskade eine Datendiode parallelgeschaltet ist,
- Figur 6: die Anordnung gemäß Figur 5, wobei zusätzlich ein Signaturspeicher in der Schnittstelleneinrichtung vorgesehen ist,
- Figur 7: ein Ausführungsbeispiel für eine Anordnung, bei der eine Schnittstelleneinrichtung durch eine Kaskade hintereinander geschalteter Schnittstellenmodule gebildet ist und eine Datendiode vorhanden ist, die einen Datenfluss von der Steuereinrichtung in eines der Schnittstellenmodule der Schnittstelleneinrichtung erlaubt, und
- Figur 8: ein Ausführungsbeispiel für eine Anordnung, die vom Aufbau der Anordnung gemäß Figur 7 entspricht, wobei in der Schnittstelleneinrichtung zusätzlich ein Signaturspeicher vorhanden ist.

In den Figuren werden der Übersicht halber für identische oder vergleichbare Komponenten stets dieselben Bezugszeichen verwendet.

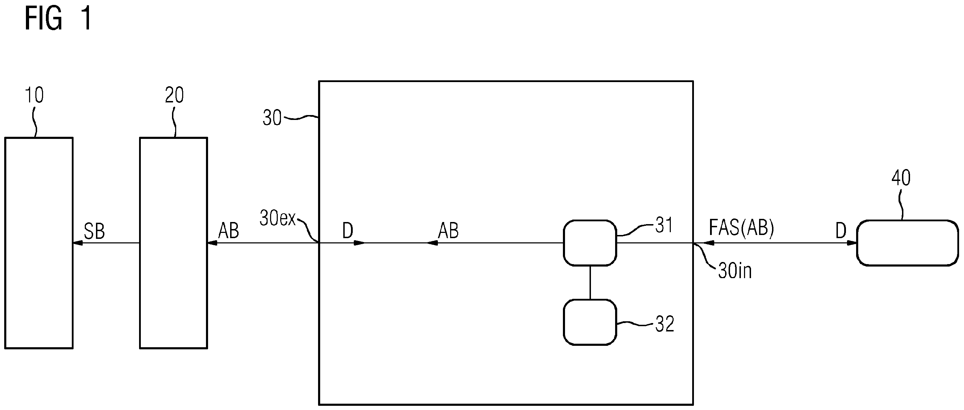

Die Figur 1 zeigt eine Anordnung mit einer technischen Anlage 10, bei der es sich beispielsweise um eine Eisenbahnanlage handeln kann. Die technische Anlage 10 steht mit einer Steuereinrichtung 20 in Verbindung, die die technische Anlage 10 mittels Steuerbefehlen SB steuern und den Zustand der technischen Anlage mittels der Steuerbefehle SB verändern kann. Bei der Steuereinrichtung 20 kann es sich beispielsweise um einen Stellwerksrechner eines Eisenbahnstellwerks oder einen Leitstellenrechner einer Eisenbahnleitstelle handeln.

Mit der Steuereinrichtung 20 steht eine Schnittstelleneinrichtung 30 in Verbindung, die eine externe Schnittstelle zum Anschluss an eine externe Fernabfrageeinrichtung 40 bildet. Die Schnittstelleneinrichtung 30 ermöglicht es, mittels der Fernabfrageeinrichtung 40 Fernabfragebefehle über die Schnittstelleneinrichtung 30 an die Steuereinrichtung 20 zu senden, um eine Übermittlung angefragter Daten D zu initiieren.

Die Schnittstelleneinrichtung 30 weist eine Prüfeinrichtung 31 auf, die geeignet ist, eingehende Fernabfragesignale FAS(AB) auszuwerten, darin enthaltene Abfragebefehle AB zu erkennen und diese, sofern sie zulässig sind bzw. als zulässig erkannt werden, an die Steuereinrichtung 20 weiterzuleiten, damit die mittels des Abfragebefehls AB angefragten Daten D von der Steuereinrichtung 20 über die Schnittstelleneinrichtung 30 zur Fernabfrageeinrichtung 40 übermittelt werden können. Zur Prüfung der Abfragebefehle AB weist die Prüfeinrichtung 31 einen Speicher 32 auf, in dem alle als zulässig angesehenen Abfragebefehle abgespeichert sind.

Die Anordnung gemäß Figur 1 kann beispielsweise wie folgt betrieben werden.

Zur Abfrage von Daten D aus der Steuereinrichtung 20 wird ein Fernabfragesignal FAS(AB) mittels der Fernabfrageeinrichtung 40 in eine externe Schnittstelle 30ex der Schnittstelleneinrichtung 30 eingespeist. Das Fernabfragesignal FAS(AB) gelangt zu der Prüfeinrichtung 31, die das Fernabfragesignal FAS(AB) auf einen darin enthaltenen Abfragebefehl AB untersucht. Wird ein solcher Abfragebefehl AB identifiziert, so wird geprüft, ob der jeweilige Abfragebefehl AB als zulässig angesehen wird. Hierzu greift die Prüfeinrichtung 31 auf den Speicher 32 zurück, in dem alle als zulässig angesehenen Abfragebefehle abgespeichert sind. Mit anderen Worten vergleicht die Prüfeinrichtung 31 den im Fernabfragesignal FAS(AB) enthaltenen Abfragebefehl AB mit den im Speicher 32 enthaltenen Abfragebefehlen und leitet den jeweiligen Abfragebefehl AB über die interne Schnittstelle 30in der Schnittstelleneinrichtung 30 an die Steuereinrichtung 20 weiter, wenn der Abfragebefehl in dem Speicher 32 aufgefunden wurde und demgemäß zulässig ist. Wird im Speicher 32 kein entsprechender Eintrag gefunden, so schließt die Prüfeinrichtung 31 daraus, dass der Abfragebefehl AB ungültig ist und nicht weitergeleitet werden kann.

Geht bei der Steuereinrichtung 20 der Abfragebefehl AB von der Schnittstelleneinrichtung 30 ein, so wird die Steuereinrichtung 20 die angefragten Daten D über die Schnittstelleneinrichtung 30 an die Fernabfrageeinrichtung 40 übermitteln.

Die Schnittstelleneinrichtung 30 gemäß Figur 1 ermöglicht somit eine Fernabfrage von Daten D der technischen Anlage 10 mittels der Fernabfrageeinrichtung 40, sofern im Rahmen der Fernabfrage zulässige Abfragebefehle übermittelt werden, aber sie blockiert jedwedes unmittelbares Einspeisen von Steuerbefehlen oder Abfragebefehlen AB in die Steuereinrichtung 20. Die Steuereinrichtung 20 wird somit durch die Schnittstelleneinrichtung 30 vor einem unmittelbaren bzw. direkten Zugriff seitens der Fernabfrageeinrichtung 40 geschützt.

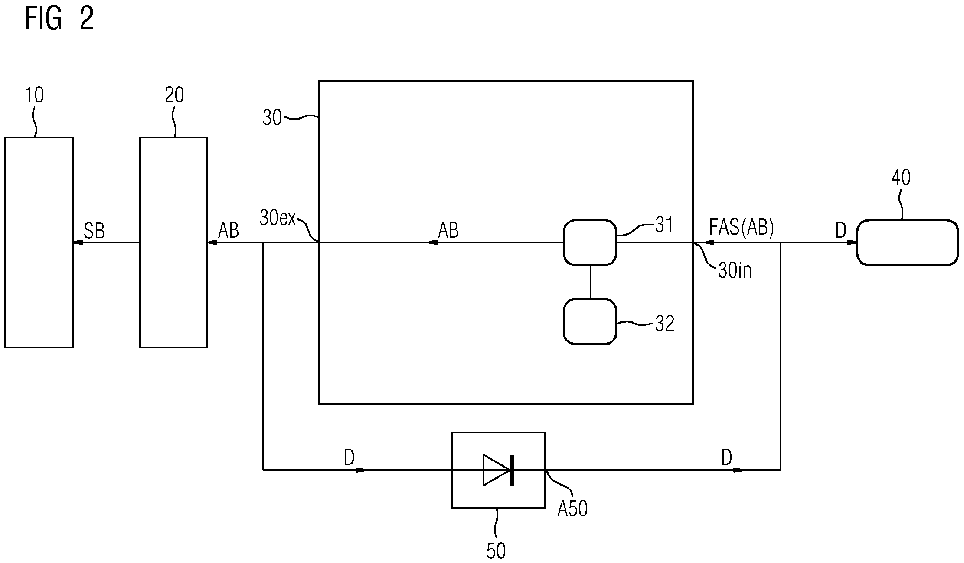

Die Figur 2 zeigt ein Ausführungsbeispiel für eine Anlage, bei der eine Datendiode 50 parallel zur Schnittstelleneinrichtung 30 geschaltet ist. Die Datendiode 50 ermöglicht eine unidirektionale Datenübertragung von der Steuereinrichtung 20 in Richtung der Fernabfrageeinrichtung 40, aber sie blockiert jegliche Übertragung von Signalen oder Daten in umgekehrter Richtung, hier also von der Fernabfrageeinrichtung 40 in Richtung zu der Steuereinrichtung 20. Die Steuereinrichtung 20 ist somit durch die Datendiode 50 vor einem unmittelbaren Zugriff der Fernabfrageeinrichtung 40 geschützt.

Wird nun mittels der Fernabfrageeinrichtung 40 ein zulässiger Abfragebefehl AB mittels eines Fernabfragesignals FAS(AB) an die Schnittstelleneinrichtung 30 übertragen, so wird die Schnittstelleneinrichtung 30 den Abfragebefehl AB an die Steuereinrichtung 20 weiterleiten. Die Steuereinrichtung 20 wird die angefragten Daten D über die Datendiode 50 an die Fernabfrageeinrichtung 40 übermitteln.

Ein Vorteil der Anordnung gemäß Figur 2 besteht darin, dass bei entsprechender Ausgestaltung der Datendiode eine höhere Datenübertragungsrate erreicht werden kann als bei der Anordnung gemäß Figur 1, bei der die Daten D über die bidirektional betriebene Schnittstelleneinrichtung 30 weitergeleitet werden.

Im Übrigen gelten die Ausführungen im Zusammenhang mit der Figur 1 bei dem Ausführungsbeispiel gemäß Figur 2 entsprechend.

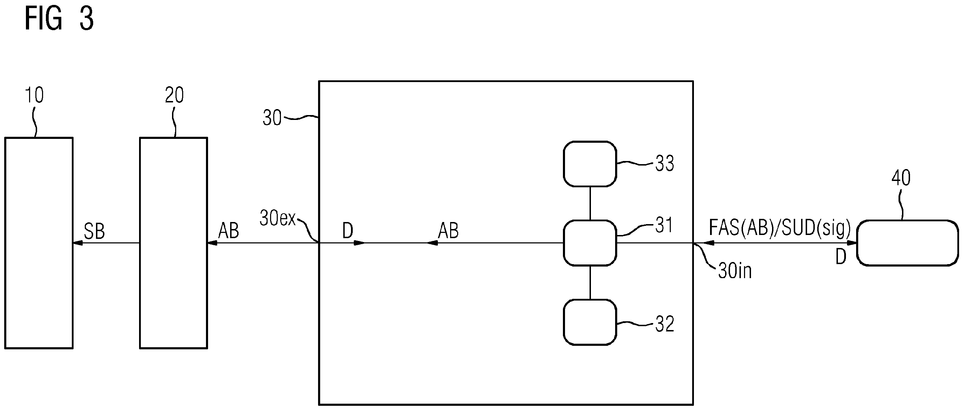

Die Figur 3 zeigt ein Ausführungsbeispiel für eine Anordnung, bei der die Schnittstelleneinrichtung 30 zusätzlich mit einem Signaturspeicher 33 ausgestattet ist. In dem Signaturspeicher 33 sind als gültig angesehene Signaturen gespeichert.

Anhand der in dem Signaturspeicher 33 gespeicherten Signaturen kann die Prüfeinrichtung 31 feststellen, ob eine an der externen Schnittstelle 30ex der Schnittstelleneinrichtung 30 eingehende signierte Software-Update-Datei korrekt signiert ist und das in der signierten Software-Update-Datei enthaltene Software-Update ausgeführt werden darf.

Die Anordnung gemäß Figur 3 kann beispielsweise wie folgt betrieben werden:
Soll die Schnittstelleneinrichtung 30 und/oder die Steuereinrichtung 20 upgedatet werden, so wird eine das entsprechende Software-Update für die Schnittstelleneinrichtung 30 bzw. die Steuereinrichtung 20 enthaltende Software-Update-Datei erzeugt. Anschließend wird die Software-Update-Datei signiert, wobei eine signierte Software-Update-Datei erzeugt wird. Die signierte Software-Update-Datei ist in der Figur 3 mit dem Bezugszeichen SUD(sig) gekennzeichnet.

Die Prüfeinrichtung 31 wird die an ihrer externen Schnittstelle 30ex eingehende signierte Software-Update-Datei SUD(sig) auf eine korrekte Signatur prüfen, wobei sie die im Signaturspeicher 33 gespeicherten Signaturen berücksichtigt. Stellt sie fest, dass die Software-Update-Datei SUD(sig) mit einer im Signaturspeicher 33 gespeicherten Signatur bzw. korrekt signiert ist, so wird sie die Ausführung des SoftwareUpdates erlauben und - wenn sich das Software-Update auf die Schnittstelleneinrichtung 30 bezieht - das Software-Update selbst ausführen oder - wenn sich das Software-Update auf die Steuereinrichtung 20 bezieht - das Software-Update an die Steuereinrichtung 20 zur Ausführung weiterleiten.

Die Signierung und Signaturprüfung kann beispielsweise auf Schlüsselpaaren mit einem öffentlichen und einem privaten Schlüssel beruhen, wie sie beispielsweise von der PGP- oder S/MIME-Verschlüsselung bekannt ist.

Im Übrigen gelten die Ausführungen im Zusammenhang mit den Figuren 1 und 2 bei der Anordnung gemäß Figur 3 entsprechend. Die Übermittlung der Daten D in Richtung der Fernabfrageeinrichtung 40 kann über die Schnittstelleneinrichtung 30 - wie in den Figuren 1 und 3 gezeigt - oder über eine Datendiode 50 - wie in Figur 2 gezeigt - erfolgen.

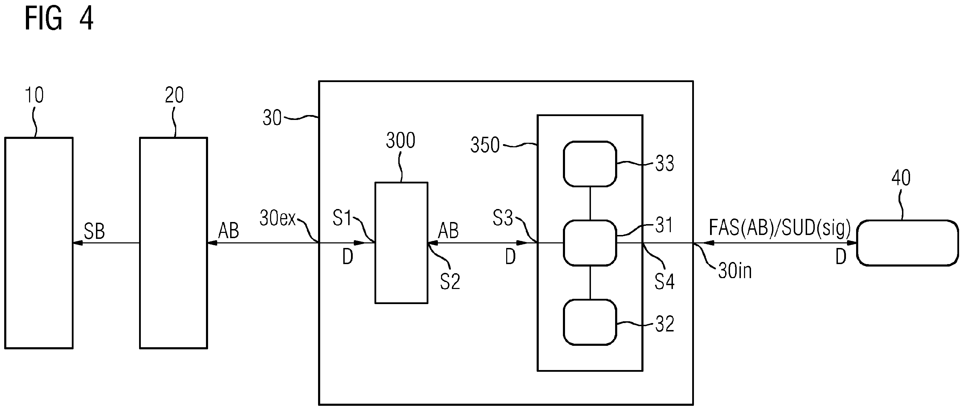

Die Figur 4 zeigt ein Ausführungsbeispiel für eine Schnittstelleneinrichtung 30, die eine Kaskade von zwei hintereinander geschalteten Schnittstellenmodulen umfasst. So erkennt man in der Figur 4 ein internes Schnittstellenmodul 300 und ein externes Schnittstellenmodul 350, die jeweils eine interne Schnittstelle und eine externe Schnittstelle aufweisen.

Das interne Schnittstellenmodul 300 ist mittels seiner internen Schnittstelle - nachfolgend erste Schnittstelle S1 genannt - mit der internen Schnittstelle 30in der Schnittstelleneinrichtung 30 und damit mit der Steuereinrichtung 20 verbunden. Mit seiner externen Schnittstelle - nachfolgend zweite Schnittstelle S2 genannt - ist das interne Schnittstellenmodul 300 mit dem vorgeordneten externen Schnittstellenmodul 350 verbunden.

Das externe Schnittstellenmodul 350 ist mittels seiner internen Schnittstelle - nachfolgend dritte Schnittstelle S3 genannt - mit der zweiten Schnittstelle S2 verbunden; mittels seiner externen Schnittstelle - nachfolgend vierte Schnittstelle S4 genannt - ist das externe Schnittstellenmodul 350 mit der externen Schnittstelle 30ex der Schnittstelleneinrichtung 30 und damit mit der Fernabfrageeinrichtung 40 verbunden.

Die Prüfeinrichtung 31 der Schnittstelleneinrichtung 30 ist vorzugsweise im externen Schnittstellenmodul 350 angeordnet, da das externe Schnittstellenmodul 350 das - von der Fernabfrageeinrichtung 40 aus gesehen - erste Schnittstellenmodul bildet.

Die Anordnung gemäß Figur 4 kann beispielsweise wie folgt betrieben werden:
Geht an der externen Schnittstelle 30ex der Schnittstelleeinrichtung 30 bzw. an der vierten Schnittstelle S4 des externen Schnittstellenmoduls 350 ein Fernabfragesignal FAS(AB) der Fernabfrageeinrichtung 40 ein, so wird die in dem externen Schnittstellenmodul 350 angeordnete Prüfeinrichtung 31 prüfen, ob in dem Fernabfragesignal FAS(AB) ein zulässiger Abfragebefehl AB enthalten ist. Zu diesem Zweck wird sie den Speicher 32, in dem als zulässig abgespeicherte Abfragebefehle gespeichert sind, abfragen und einen entsprechenden Vergleich durchführen. Der Speicher 32, der die zulässigen Abfragebefehle enthält, ist vorzugsweise Bestandteil des externen Schnittstellenmoduls 350.

Stellt das externe Schnittstellenmodul 350 fest, dass der Abfragebefehl AB gültig ist, so wird dieser über die dritte Schnittstelle S3 zur zweiten Schnittstelle S2 übermittelt. Mit Blick auf eine optimale Entkopplung des internen Schnittstellenmoduls 300 von der Fernabfrageeinrichtung 40 - also mit Blick auf einen möglichst guten Schutz vor einem Hacker-Angriff - wird es als vorteilhaft angesehen, wenn die Datenübertragung zwischen der zweiten Schnittstelle S2 und der dritten S3 paketfrei oder auf der Basis einer anderen paketorientierten Signalübertragung erfolgt als die Datenübertragung zwischen der Fernabfrageeinrichtung 40 und der vierten Schnittstelle S4. Mit anderen Worten soll es einen Bruch bzw. Protokollbruch in der Signalübertragung geben, durch den das interne Schnittstellenmodul 300 von der Fernabfrageeinrichtung 40 bestmöglich entkoppelt wird.

Geht der Abfragebefehl AB bei dem internen Schnittstellenmodul 300 ein, so wird es diesen an die Steuereinrichtung 20 weiterleiten. Die Steuereinrichtung 20 wird die angefragten Daten D nachfolgend über die Schnittstelleneinrichtung 30 zur Fernabfrageeinrichtung 40 übermitteln, wie dies im Zusammenhang mit der Figur 1 bereits erläutert worden ist.

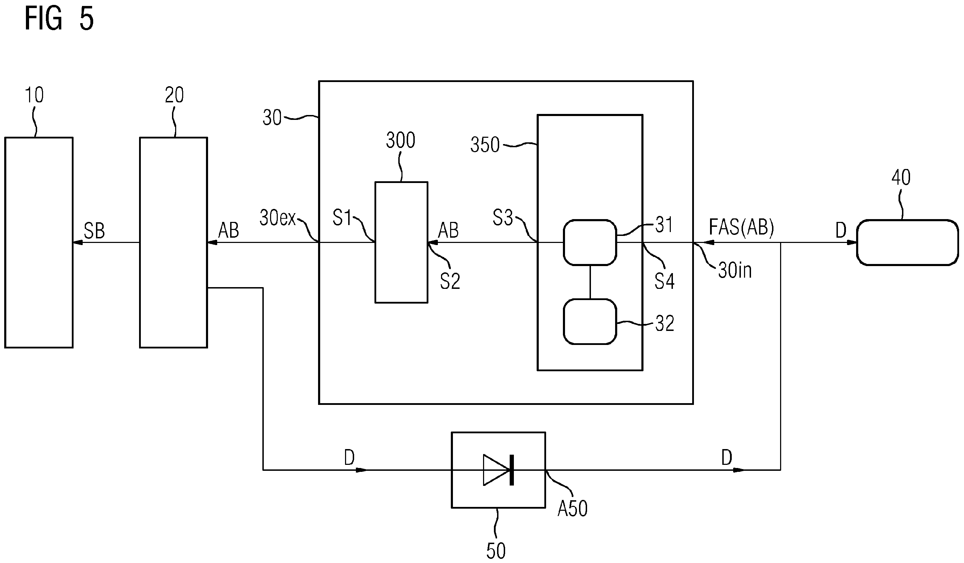

Die Figur 5 zeigt ein Ausführungsbeispiel für eine Anordnung, die im Wesentlichen der Anordnung gemäß Figur 4 entspricht, mit der Ausnahme, dass die Übertragung der Daten D von der Steuereinrichtung 20 zur Fernabfrageeinrichtung 40 nicht über die Schnittstelleneinrichtung 30, sondern über eine parallel geschaltete Datendiode 50 erfolgt, wie dies bereits im Zusammenhang mit dem Ausführungsbeispiel gemäß Figur 2 erläutert wurde. Diesbezüglich sei auf die obigen Ausführungen im Zusammenhang mit der Figur 2 verwiesen.

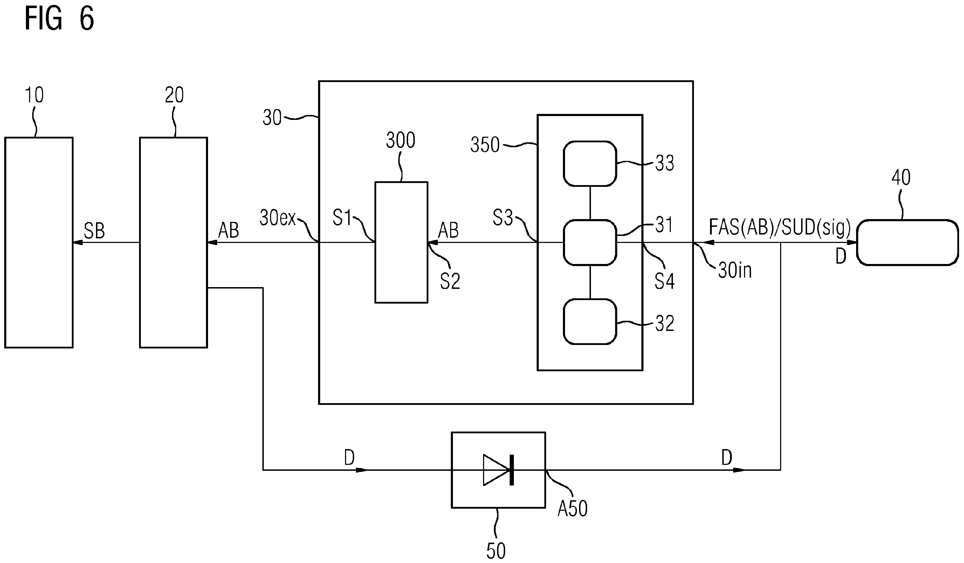

Die Figur 6 zeigt ein Ausführungsbeispiel für eine Anordnung, die der Anordnung gemäß Figur 5 entspricht, wobei in dem externen Schnittstellenmodul 350 zusätzlich zur Prüfeinrichtung 31 und dem Speicher 32 noch ein Signaturspeicher 33 vorhanden ist. In dem Signaturspeicher 33 sind Signaturen abgespeichert, die als gültig angesehen werden und zur Prüfung eingehender signierter Software-Update-Dateien SUD(sig) herangezogen werden, wie dies im Zusammenhang mit der Figur 3 oben bereits erläutert worden ist.

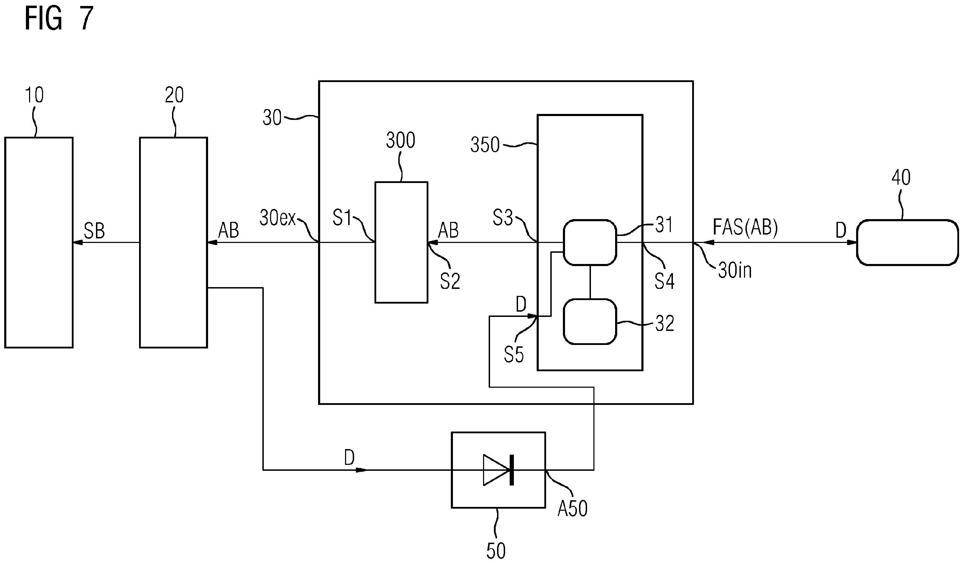

Die Figur 7 zeigt ein Ausführungsbeispiel für eine Anordnung, bei der eine Datendiode 50 vorhanden ist, wie sie auch bei den Ausführungsbeispielen gemäß Figur 5 und 6 vorgesehen ist. Im Unterschied zu dem Ausführungsbeispiel gemäß den Figuren 5 und 6 ist die Datendiode 50 anders verschaltet. So lässt sich erkennen, dass der Datenausgang A50 der Datendiode 50 bei dem Ausführungsbeispiel gemäß Figur 7 nicht unmittelbar mit der Fernabfrageeinrichtung 40 in Verbindung steht, sondern statt dessen an das externe Schnittstellenmodul 350, sei es an die dritte Schnittstelle S3 des externen Schnittstellenmoduls 350 oder - wie in der Figur 7 gezeigt - eine andere Schnittstelle (nachfolgend fünfte Schnittstelle S5 genannt) des externen Schnittstellenmoduls 350, angeschlossen ist. Die von der Steuereinrichtung 20 angefragten Daten D werden somit von der Datendiode 50 nicht unmittelbar zur Fernabfrageeinrichtung 40 übermittelt, sondern zunächst zum externen Schnittstellenmodul 350, das die angefragten Daten dann nachfolgend an die Fernabfrageeinrichtung 40 weiterleitet.

Durch die Anordnung der Datendiode 50 innerhalb der Kaskade der Schnittstellenmodule 300 und 350 wird eine besonders gute Entkopplung zwischen der Steuereinrichtung 20 und der Fernabfrageeinrichtung 40 auch in der Abfragerichtung der Daten D erreicht, weil die Datendiode 50 von dem externen Schnittstellenmodul 350 bei der Trennung der Steuereinrichtung 20 von der Fernabfrageeinrichtung 40 unterstützt wird.

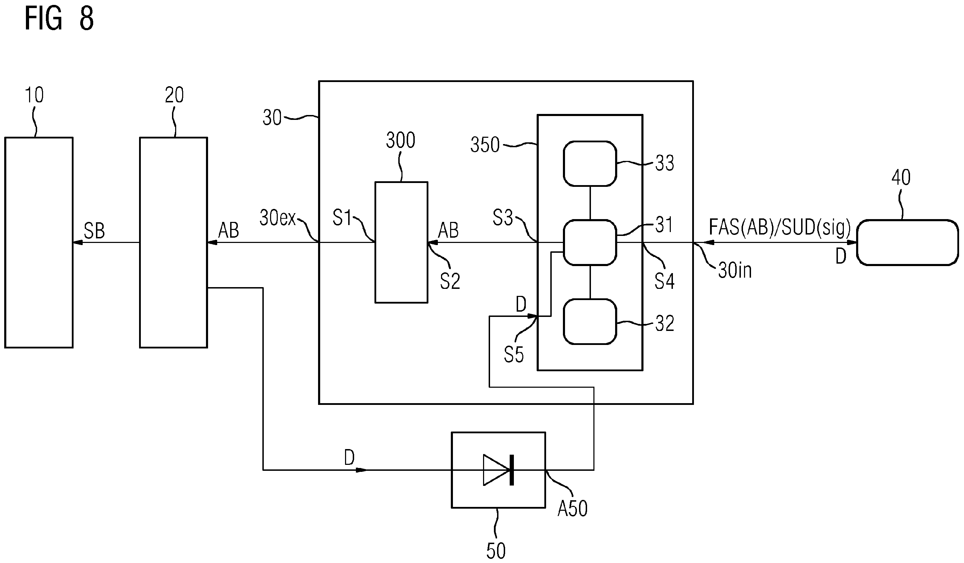

Die Figur 8 zeigt eine Anordnung, die im Wesentlichen der Anordnung gemäß Figur 7 entspricht; zusätzlich ist bei der Anordnung gemäß Figur 8 vorgesehen, dass das externe Schnittstellenmodul 350 mit einem Signaturspeicher 33 ausgestattet ist, der zur Prüfung signierter Software-Update-Dateien SUD(sig) als zulässig angesehene Signaturen enthält. Bezüglich der Prüfung von signierten Software-Update-Dateien SUD(sig) sei auf die obigen Ausführungen im Zusammenhang mit den Figuren 3 und 6 verwiesen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung mit einer technischen Anlage (10) und einer die Anlage (10) steuernden Steuereinrichtung (20), die mittels Steuerbefehlen (SB) den technischen Zustand der Anlage (10) verändern kann,
wobei
- an die Steuereinrichtung (20) eine Schnittstelleneinrichtung (30) angeschlossen ist, die eine externe Schnittstelle zum Anschluss an eine externe Fernabfrageeinrichtung (40) bildet,
- die Schnittstelleneinrichtung (30) eine Prüfeinrichtung (31) aufweist, die derart ausgestaltet ist, dass sie ein empfangenes Fernabfragesignal (FAS(AB)) auf das Vorliegen eines in der Schnittstelleneinrichtung (30) als zulässig abgespeicherten Abfragebefehls (AB) prüft und im Falle der Zulässigkeit allein den im Fernabfragesignal enthaltenen Abfragebefehl (AB) an die Steuereinrichtung (20) weiterleitet und das Weiterleiten des Fernabfragesignals (FAS(AB)) als solchem oder aller anderen Steuerbefehle, die keine als zulässig abgespeicherten Abfragebefehle (AB) sind, blockiert
- die Steuereinrichtung (20) bei Vorliegen eines Abfragebefehls (AB) die angefragten Daten (D) über die Schnittstelleneinrichtung (30) an die externe Fernabfrageeinrichtung (40) übermittelt.

2. Anordnung nach Anspruch 1,
**dadurch gekennzeichnet, dass** die sicherungstechnische Anlage (10) eine Eisenbahnanlage ist und die Steuerbefehle, die den technischen Zustand der Anlage (10) verändern würden, solche sind, die den Betriebszustand der Eisenbahnanlage verändern würden.

3. Anordnung nach einem der voranstehenden Ansprüche,
**dadurch gekennzeichnet, dass**
- die Schnittstelleneinrichtung (30) zwei- oder mehrstufig ist und zwei oder mehr Schnittstellenmodule (300, 350) aufweist, die über Schnittstellen kaskadiert hintereinander geschaltet sind,
- wobei zwischen zumindest zweien der Schnittstellenmodule (300, 350) eine Signalübertragung mit einem anderen Übertragungsstandard oder auf der Basis eines anderen Paketprotokolls erfolgt als die Kommunikation zwischen der Schnittstelleneinrichtung (30) und der Fernabfrageeinrichtung (40).

4. Anordnung nach Anspruch 3,
**dadurch gekennzeichnet, dass** das in der Kaskade erste Schnittstellenmodul (350), das mit der externen Fernabfrageeinrichtung (40) in Verbindung steht, derart ausgestaltet ist, dass es bei Vorliegen eines Fernabfragesignals (FAS(AB)), das einen als zulässig erkannten Abfragebefehl (AB) enthält, ausschließlich den Abfragebefehl (AB) an das in der Kaskade nächste Schnittstellenmodul (300) weiterleitet, und zwar unter Paketprotokolländerung oder auf der Basis einer paketfreien Signalübertragung.

5. Anordnung nach einem der voranstehenden Ansprüche,
**dadurch gekennzeichnet, dass**
- die Schnittstelleneinrichtung (30) ein internes Schnittstellenmodul (300) und ein externes Schnittstellenmodul (350) aufweist, die jeweils eine interne Schnittstelle und eine externe Schnittstelle aufweisen,
- das interne Schnittstellenmodul (300) mittels seiner internen Schnittstelle - nachfolgend erste Schnittstelle (S1) genannt - mit der Steuereinrichtung (20) und mittels seiner externen Schnittstelle - nachfolgend zweite Schnittstelle (S2) genannt - mit einem vorgeordneten Schnittstellenmodul (350) der Modulkaskade, im Falle zweier Schnittstellenmodule (300, 350) dem externen Schnittstellenmodul (350), verbunden ist,
- das externe Schnittstellenmodul (350) mittels seiner internen Schnittstelle - nachfolgend dritte Schnittstelle genannt (S3) - mit der Schnittstelle eines nachgeordneten Schnittstellenmoduls (300), im Falle zweier Schnittstellenmodule (300, 350) dem internen Schnittstellenmodul (300), verbunden ist, und mittels seiner externen Schnittstelle - nachfolgend vierte Schnittstelle (S4) genannt - mit der Fernabfrageeinrichtung (40) verbindbar ist, und
- die Prüfeinrichtung (31) in dem externen Schnittstellenmodul (350) enthalten ist.

6. Anordnung nach Anspruch 5,
**dadurch gekennzeichnet, dass**
- die vierte Schnittstelle (S4) eine paketorientierte Schnittstelle ist, die eine protokollbasierte Kommunikation mit der Fernabfrageeinrichtung (40) auf der Basis eines vorgegebenen externen Paketprotokolls durchführt, und
- die Datenübertragung zwischen zumindest zweien der Schnittstellenmodule (300, 350), im Falle zweier Schnittstellenmodule (300, 350) zwischen der zweiten und dritten Schnittstelle (S2, S3), auf einer internen paketfreien Signalübertragung basiert oder auf einem internen Paketprotokoll beruht, das sich von dem externen Paketprotokoll unterscheidet.

7. Anordnung nach einem der voranstehenden Ansprüche,
**dadurch gekennzeichnet, dass**
- das interne Schnittstellenmodul (300) derart ausgestaltet ist, dass es - bei Vorliegen eines Abfragebefehls (AB) an seiner zweiten Schnittstelle (S2) - den Abfragebefehl (AB) an die erste Schnittstelle (S1) und damit an die Steuereinrichtung (20) weiterleitet,
- und zwar auf der Basis eines dritten Paketprotokolls, das sich von dem internen Paketprotokoll und/oder dem externen Paketprotokoll unterscheidet, oder auf der Basis einer paketfreien Signalübertragung, die sich von der internen paketfreien Signalübertragung unterscheidet.

8. Anordnung nach einem der Ansprüche 3 bis 7,
**dadurch gekennzeichnet, dass**
- parallel zu zumindest dem in der Kaskade - von der Fernabfrageeinrichtung (40) aus gesehen - letzten Schnittstellenmodul (300), also demjenigen, das mit der Steuereinrichtung (20) in Verbindung steht, parallel zu der Schnittstelleneinrichtung (30) insgesamt eine Datendiode (50) geschaltet ist und
- die Steuereinrichtung (20) bei Vorliegen eines Abfragebefehls (AB) die angefragten Daten über die Datendiode (50) und damit an dem mit der Steuereinrichtung (20) verbundenen Schnittstellenmodul (300), an der Schnittstelleneinrichtung (30) insgesamt vorbei an die externe Fernabfrageeinrichtung (40) übermittelt.

9. Anordnung nach einem der Ansprüche 3 bis 7,
**dadurch gekennzeichnet, dass**
- parallel zu zumindest dem in der Kaskade dem internen Schnittstellenmodul (300) im Falle von zwei Schnittstellenmodulen parallel zu der Schnittstelleneinrichtung (30) insgesamt eine Datendiode (50) geschaltet ist und
- die Steuereinrichtung (20) bei Vorliegen eines Abfragebefehls (AB) die angefragten Daten über die Datendiode (50) und damit an dem internen Schnittstellenmodul (300) im Falle von zwei Schnittstellenmodulen an der Schnittstelleneinrichtung (30) insgesamt vorbei an die externe Fernabfrageeinrichtung (40) übermittelt.

10. Anordnung nach einem der voranstehenden Ansprüche,
**dadurch gekennzeichnet, dass**
- die Schnittstelleneinrichtung (30) einen Signaturspeicher (33) zur Abspeicherung einer oder mehrerer als gültig angesehener Signaturen aufweist, und
- die Schnittstelleneinrichtung (30) derart ausgestaltet ist, dass sie ein an ihrer externen Schnittstelle empfangenes Softwareupdate auf das Vorliegen einer oder mehrerer als gültig abgespeicherter Signaturen prüft, bei erfolgreicher Signaturprüfung das Softwareupdate ausführt und bei erfolgloser Signaturprüfung die Ausführung des Softwareupdates unterlässt.

11. Verfahren zum Betreiben einer Anordnung, die eine technische Anlage (10) und eine die Anlage (10) steuernde Steuereinrichtung (20), die mittels Steuerbefehlen (SB) den technischen Zustand der Anlage (10) verändern kann, aufweist, wobei
- mittels einer externen Fernabfrageeinrichtung (40) ein Fernabfragesignal (FAS(AB)) an eine der Steuereinrichtung (20) vorgeordnete Schnittstelleneinrichtung (30) gesendet wird,
- die Schnittstelleneinrichtung (30) prüft, ob das Fernabfragesignal (FAS(AB)) einen in der Schnittstelleneinrichtung (30) als zulässig abgespeicherten Abfragebefehl (AB) zur Abfrage von Anlagendaten enthält,
- falls ein als zulässig abgespeicherter Abfragebefehl (AB) im Fernabfragesignal (FAS(AB)) enthalten ist, allein dieser im Fernabfragesignal enthaltene Abfragebefehl (AB) an die Steuereinrichtung (20) weitergeleitet wird und das Weiterleiten des Fernabfragesignals (FAS(AB)) als solchem oder aller anderen Steuerbefehle, die keine als zulässig abgespeicherten Abfragebefehle (AB) sind, blockiert wird und andernfalls eine Weiterleitung des Abfragebefels (AB) unterbleibt, und
- im Falle eines zulässigen Abfragebefehls (AB) die angefragten Daten an die externe Fernabfrageeinrichtung (40) übermittelt werden.

12. Verfahren nach Anspruch 11,
**dadurch gekennzeichnet, dass**
- vor der Weiterleitung des Abfragebefehls (AB) an die Steuereinrichtung (20) dieser von einem externen Schnittstellenmodul (350) der Schnittstelleneinrichtung (30) zunächst an ein internes Schnittstellenmodul (300) der Schnittstelleneinrichtung (30) übermittelt wird, und zwar unter Paketprotokolländerung oder auf der Basis einer paketfreien Signalübertragung und
- der Abfragebefehl (AB) von dem internen Schnittstellenmodul (300) der Schnittstelleneinrichtung (30) an die Steuereinrichtung (20) weitergeleitet wird.

13. Verfahren nach einem der voranstehenden Ansprüche 11-12,
**dadurch gekennzeichnet, dass**
- die Schnittstelleneinrichtung (30) zwei- oder mehrstufig ist und zwei oder mehr Schnittstellenmodule (300, 350) aufweist, die über Schnittstellen unter Ausbildung einer Kaskade hintereinander geschaltet sind,
- parallel zu zumindest dem in der Kaskade - von der Fernabfrageeinrichtung (40) aus gesehen - letzten Schnittstellenmodul (300), also demjenigen, das mit der Steuereinrichtung (20) in Verbindung steht, parallel zu der Schnittstelleneinrichtung (30) insgesamt eine Datendiode (50) geschaltet ist und die Datendiode (50) derart gepolt ist, dass Daten in Richtung der externe Fernabfrageeinrichtung (40) gesendet werden können, und
- bei Vorliegen eines Abfragebefehls (AB) die angefragten Daten (D) über die Datendiode (50) und damit an dem mit der Steuereinrichtung (20) verbundenen Schnittstellenmodul (300) an der Schnittstelleneinrichtung (30) insgesamt vorbei an die externe Fernabfrageeinrichtung (40) übermittelt werden.

14. Verfahren nach einem der voranstehenden Ansprüche 11-12,
**dadurch gekennzeichnet, dass**
- die Schnittstelleneinrichtung (30) zwei- oder mehrstufig ist und zwei oder mehr Schnittstellenmodule (300, 350) aufweist, die über Schnittstellen unter Ausbildung einer Kaskade hintereinander geschaltet sind,
- parallel zu zumindest dem in der Kaskade - von der Fernabfrageeinrichtung (40) aus gesehen - letzten Schnittstellenmodul (300), also dem internen Schnittstellenmodul (300) im Falle von zwei Schnittstellenmodulen parallel zu der Schnittstelleneinrichtung (30) insgesamt eine Datendiode (50) geschaltet ist und die Datendiode (50) derart gepolt ist, dass Daten in Richtung der externe Fernabfrageeinrichtung (40) gesendet werden können, und
- bei Vorliegen eines Abfragebefehls (AB) die angefragten Daten (D) über die Datendiode (50) und damit an dem mit der Steuereinrichtung (20) verbundenen internen Schnittstellenmodul (300) im Falle von zwei Schnittstellenmodulen an der Schnittstelleneinrichtung (30) insgesamt vorbei an die externe Fernabfrageeinrichtung (40) übermittelt werden.

15. Verfahren nach einem der voranstehenden Ansprüche 11-14,
**dadurch gekennzeichnet, dass**
- zur Durchführung eines Softwareupdates eine Softwareupdatedatei signiert wird, und zwar auf der Basis einer oder mehrerer in der Schnittstelleneinrichtung (30) als gültig abgespeicherter Signaturen,
- die signierte Softwareupdatedatei (SUD(sig)) an die Schnittstelleneinrichtung (30) übertragen wird,
- die Schnittstelleneinrichtung (30) die signierte Softwareupdatedatei (SUD(sig)) auf das Vorliegen einer oder mehrerer als gültig abgespeicherter Signaturen prüft, bei erfolgreicher Signaturprüfung das in der Softwareupdatedatei (SUD(sig)) enthaltene Softwareupdate ausführt und bei erfolgloser Signaturprüfung die Ausführung des Softwareupdates unterlässt.

## Claims

1. Arrangement with a technical system (10) and a control device (20) which controls the system (10) which can change the technical state of the system (10) by means of control commands (SB),
**wherein**
- an interface device (30) is connected to the control device (20) which forms an external interface for connection to an external remote query device (40),
- the interface device (30) has a checking device (31) which is designed such that it checks a received remote query signal (FAS(AB)) for the presence of a query command (AB) stored in the interface device (30) as permissible and in the event of permissibility only forwards the query command (AB) contained in the remote query signal to the control device (20) and blocks the forwarding of the remote query signal (FAS(AB)) as such or all other control commands which are not query commands (AB) stored as permissible,
- if a query command (AB) is present, the control device (20) transmits the requested data (D) to the external remote query device (40) via the interface device (30).

2. Arrangement according to claim 1,
**characterised in that**
the safety-related system (10) is a railway system and the control commands which would change the technical state of the system (10) are those which would change the operating state of the railway system.

3. Arrangement according to one of the preceding claims,
**characterised in that**
- the interface device (30) is two- or multi-stage and has two or more interface modules (300, 350) which are connected in series in a cascaded manner via interfaces,
- wherein between at least two of the interface modules (300, 350) a signal transmission takes place with another transmission standard or on the basis of a packet protocol other than the communication between the interface device (30) and the remote query device (40).

4. Arrangement according to claim 3,
**characterised in that**
the first interface module (350) in the cascade, which is connected to the external remote query device (40), is designed in such a way that, in the presence of a remote query signal (FAS(AB)) which contains a query command (AB) recognized as permissible, it only forwards the query command (AB) to the next interface module (300) in the cascade, namely by means of a packet protocol change or on the basis of a packet-free signal transmission.

5. Arrangement according to one of the preceding claims,
**characterised in that**
- the interface device (30) has an internal interface module (300) and an external interface module (350) which each have an internal interface and an external interface,
- the internal interface module (300) is connected by means of its internal interface - hereinafter referred to as the first interface (S1) - to the control device (20) and by means of its external interface - hereinafter referred to as the second interface (S2) - to an upstream interface module (350) of the module cascade, in the case of two interface modules (300, 350) to the external interface module (350),
- the external interface module (350) is connected by means of its internal interface - hereinafter referred to as the third interface (S3) - to the interface of a downstream interface module (300), in the case of two interface modules (300, 350) to the internal interface module (300), and can be connected by means of its external interface - hereinafter referred to as the fourth interface (S4) - to the remote query device (40), and
- the checking device (31) is contained in the external interface module (350).

6. Arrangement according to claim 5,
**characterised in that**
- the fourth interface (S4) is a packet-oriented interface which performs protocol-based communication with the remote query device (40) on the basis of a predetermined external packet protocol, and
- the data transmission between at least two of the interface modules (300, 350), in the case of two interface modules (300, 350) between the second and third interface (S2, S3), is based on an internal packet-free signal transmission or is based on an internal packet protocol which differs from the external packet protocol.

7. Arrangement according to one of the preceding claims,
**characterised in that**
- the internal interface module (300) is designed in such a way that it forwards the query command (AB) to the first interface (S1) and thus to the control device (20) when a query command (AB) is present at its second interface (S2),
- namely on the basis of a third packet protocol which differs from the internal packet protocol and/or the external packet protocol, or on the basis of a packet-free signal transmission which differs from the internal packet-free signal transmission.

8. Arrangement according to one of claims 3 to 7,
**characterised in that**
- a data diode (50) is connected in parallel to at least the last interface module (300) in the cascade - seen from the remote query device (40) - that is to say, to the interface module which is connected to the control device (20), in parallel to the interface device (30) as a whole and
- in the presence of a query command (AB), the control device (20) transmits the requested data via the data diode (50) and thus past the interface module (300) connected to the control device (20), past the interface device (30) as a whole to the external remote query device (40).

9. Arrangement according to one of claims 3 to 7,
**characterised in that**
- a data diode (50) is connected in parallel as a whole to at least the internal interface module (300) in the cascade in the case of two interface modules in parallel to the interface device (30), and
- in the presence of a query command (AB), the control device (20) transmits the requested data via the data diode (50) and thus past the internal interface module (300) in the case of two interface modules past the interface device (30) as a whole to the external remote query device (40).

10. Arrangement according to one of the preceding claims,
**characterised in that**
- the interface device (30) has a signature memory (33) to store one or more signatures considered valid, and
- the interface device (30) is designed in such a way that it checks a software update received at its external interface for the presence of one or more signatures stored as valid, in the case of successful signature verification, performs the software update and in the case of unsuccessful signature verification, omits the performance of the software update.

11. Method for operating an arrangement which has a technical system (10) and a control device (20) which controls the system (10) and can change the technical state of the system (10) by means of control commands (SB),
w her e i n
- a remote query signal (FAS(AB)) is sent to an interface device (30) upstream of the control device (20) by means of an external remote query device (40),
- the interface device (30) checks whether the remote query signal (FAS(AB)) contains a query command (AB) for querying system data stored as permissible in the interface device (30),
- if a query command (AB) stored as permissible is contained in the remote query signal (FAS(AB)), only this query command (AB) contained in the remote query signal (FAS(AB)) is forwarded to the control device (20) and the forwarding of the remote query signal as such or all other control commands which are not query commands (AB) stored as permissible is blocked and otherwise forwarding of the query command (AB) is omitted, and
- in the case of a permissible query command (AB), the requested data is transmitted to the external remote query device (40).

12. Method according to claim 11,
**characterised in that**
- before forwarding the query command (AB) to the control device (20), the query command (AB) is first transmitted from an external interface module (350) of the interface device (30) to an internal interface module (300) of the interface device (30), namely by means of a packet protocol change or on the basis of a packet-free signal transmission and
- the query command (AB) is forwarded from the internal interface module (300) of the interface device (30) to the control device (20).

13. Method according to one of the preceding claims 11-12,
**characterised in that**
- the interface device (30) is two- or multi-stage and has two or more interface modules (300, 350) which are connected in series in a cascaded manner via interfaces,
- a data diode (50) is connected in parallel to at least the last interface module (300) in the cascade - seen from the remote query device (40) - that is to say, the interface module which is connected to the control device (20) - in parallel to the interface device (30) as a whole and the data diode (50) is polarized in such a way that data can be sent in the direction of the external remote query device (40), and
- in the presence of a query command (AB), the requested data (D) is transmitted via the data diode (50) and thus past the interface module (300) connected to the control device (20) to the interface device (30) as a whole to the external remote query device (40).

14. Method according to one of the preceding claims 11-12,
**characterised in that**
- the interface device (30) is two- or multi-stage and has two or more interface modules (300, 350) which are connected in series in a cascaded manner via interfaces,
- a data diode (50) is connected in parallel to at least the last interface module (300) in the cascade - seen from the remote query device (40) - that is to say, the internal interface module (300) in the case of two interface modules in parallel to the interface device (30) as a whole and the data diode (50) is polarized in such a way that data can be sent in the direction of the external remote query device (40), and
- in the presence of a query command (AB), the requested data (D) is transmitted via the data diode (50) and thus past the internal interface module (300) connected to the control device (20) in the case of two interface modules past the interface device (30) as a whole to the external remote query device (40).

15. Method according to one of the preceding claims 11-14,
**characterised in that**
- to perform a software update, a software update file is signed, namely on the basis of one or more signatures stored as valid in the interface device (30),
- the signed software update file (SUD(sig)) is transferred to the interface device (30),
- the interface device (30) checks the signed software update file (SUD(sig)) for the presence of one or more signatures stored as valid, in the case of successful signature verification, performs the software update contained in the software update file (SUD(sig)) and in the case of unsuccessful signature verification, omits the performance of the software update.

## Revendications

1. Ensemble comprenant une installation (10) technique et un dispositif (20) de commande, qui commande l'installation (10) et qui peut, au moyen d'instructions (SB) de commande, modifier l'état technique de l'installation (10),
dans lequel
- au dispositif (20) de commande est connecté un dispositif (30) d'interface, qui forme une interface extérieure de connexion à un dispositif (40) extérieur de demande à distance,
- le dispositif (30) d'interface a un dispositif (31) de contrôle, qui est conformé de manière à contrôler dans un signal (FAS(AB)) reçu de demande à distance la présence d'une instruction (AB) de demande mise en mémoire comme admissible dans le dispositif (30) d'interface et, dans le cas de l'admissibilité, à acheminer au dispositif (20) de commande seulement l'instruction (AB) de demande contenue dans le signal de demande à distance et à bloquer l'acheminement du signal (FAS(AB)) de demande à distance en tant que tel ou toute autre instruction de commande, qui ne sont pas des instructions (AB) de demande mises en mémoire comme admissibles,
- le dispositif (20) de commande transmet, en présence d'une instruction (AB) de demande, les données (D) demandées au dispositif (40) extérieur de demande à distance par l'intermédiaire du dispositif (30) d'interface.

2. Ensemble suivant la revendication 1,
**caractérisé en ce que**
l'installation (10) en technique de sécurité est une installation de chemin de fer et les instructions de commande, qui modifieraient l'état technique de l'installation (10), sont des instructions qui modifieraient l'état de fonctionnement de l'installation de chemin de fer.

3. Ensemble suivant l'une des revendications précédentes,
**caractérisé en ce que**
- le dispositif (30) d'interface est à deux étages ou à plusieurs étages et a deux ou plusieurs modules (300, 350) d'interface, qui sont montés les uns derrière les autres en cascade par des interfaces,
- dans lequel entre au moins deux de modules (300, 350) d'interface a lieu une transmission de signal avec une norme de transmission haute ou sur la base d'un protocole de paquet autre que la communication entre le dispositif (30) d'interface et le dispositif (40) de demande à distance.

4. Ensemble suivant la revendication 3,
**caractérisé en ce que**
le premier module (350) d'interface dans la cascade, qui est en liaison avec le dispositif (40) extérieur de demande à distance, est conformé de manière à acheminer, en présence d'un signal (FAS(AB)) de demande à distance, qui contient une instruction (AB) de demande reconnue comme admissible, exclusivement l'instruction (AB) de demande au module (300) d'interface venant immédiatement ensuite dans la cascade et cela avec modification du protocole de paquet ou sur la base d'une transmission de signal sans paquet.

5. Ensemble suivant l'une des revendications précédentes,
**caractérisé en ce que**
- le dispositif (30) d'interface a un module (300) intérieur d'interface et un module (350) extérieur d'interface, qui ont chacun une interface intérieure et une interface extérieure,
- le module (300) intérieur d'interface est, au moyen de son interface intérieure - désignée dans ce qui suit première interface (S1) - relié au dispositif (20) de commande et, au moyen de son interface extérieure - désignée dans ce qui suit deuxième interface (S2) - relié à un module (350) d'interface antérieur de la cascade de modules, dans le cas de deux modules (300, 350) d'interfaces au module (350) extérieur d'interface,
- le module (350) extérieur d'interface peut, au moyen de son interface intérieure - désignée dans ce qui suit troisième interface (S3) - être relié à l'interface d'un module (300) d'interface postérieur, dans le cas de deux modules (300, 350) d'interface, au module (300) intérieur d'interface et, le moyen de son interface extérieure - désigné dans ce qui suit quatrième interface (S4) - être relié au dispositif (40) de demande à distance, et
- le dispositif (31) de contrôle est contenu dans le module (350) extérieur d'interface.

6. Ensemble suivant la revendication 5,
**caractérisé en ce que**
- la quatrième interface (S4) est une interface à paquet, qui effectue une communication reposant sur protocole avec le dispositif (40) de demande à distance sur la base d'un protocole à paquet extérieur donné à l'avance, et
- la transmission de données entre au moins deux des modules (300, 350) d'interface, dans le cas de deux modules (300, 350) d'interface, entre la deuxième et la troisième interface (S2, S3) repose sur une transmission de signal intérieure sans paquet ou repose sur un protocole intérieur à paquet, qui se distingue du protocole extérieur à paquet.

7. Ensemble suivant l'une des revendications précédentes,
**caractérisé en ce que**
- le module (300) intérieur d'interface est conformé de manière à acheminer - en présence d'une instruction (AB) de demande sur sa deuxième interface (S2) - l'instruction (AB) de demande à la première interface (S1) et ainsi au dispositif (20) de commande,
- et cela sur la base d'un troisième protocole à paquet, qui se distingue du protocole intérieur à paquet et/ou du protocole extérieur à paquet, ou sur la base d'une transmission de signal sans paquet, qui se distingue de la transmission de signal intérieure sans paquet.

8. Ensemble suivant l'une des revendications 3 à 7,
**caractérisé en ce que**
- en parallèle à au moins le dernier dans la cascade - considéré à partir du dispositif (40) de demande à distance - module (300) d'interface, donc celui qui est en liaison avec le dispositif (20) de commande, est montée en parallèle au dispositif (30) d'interface dans l'ensemble une diode (50) de données et
- le dispositif (20) de commande transmet, en présence d'une instruction (AB) de demande, les données demandées par l'intermédiaire de la diode (50) de données et ainsi en court-circuitant le module (300) d'interface relié au dispositif (20) de commande, le dispositif (30) d'interface, dans l'ensemble, au dispositif (40) extérieur de demande à distance.

9. Ensemble suivant l'une des revendications 3 à 7,
**caractérisé en ce que**
- en parallèle à au moins le module (300) intérieur d'interface dans la cascade, dans le cas de deux modules d'interface en parallèle au dispositif (30) d'interface dans l'ensemble est montée une diode (50) de données et
- le dispositif (20) de commande transmet, en présence d'une instruction (AB) de demande, les données demandées par l'intermédiaire de la diode (50) de données et ainsi en court-circuitant le module (300) intérieur d'interface dans le cas de deux modules d'interface le dispositif (30) d'interface, dans l'ensemble, au dispositif (40) extérieur de demande à distance.

10. Ensemble suivant l'une des revendications précédentes,
**caractérisé en ce que**
- le dispositif (30) d'interface a une mémoire (33) de signature pour la mise en mémoire d'une ou de plusieurs signatures considérées comme valables, et
- le dispositif (30) d'interface est constitué de manière à contrôler, sur une mise à jour logicielle reçue sur son interface extérieure, la présence d'une ou de plusieurs signatures mises en mémoire comme valables, à réaliser si le contrôle de signature est couronné de succès la mise à jour logicielle et si le contrôle de signature n'est pas couronné de succès à se dispenser d'exécuter la mise à jour logicielle.

11. Procédé pour faire fonctionner un agencement qui a une installation (10) technique et un dispositif (20) de commande, qui commande l'installation (10) et qui peut, au moyen d'instructions (SB) de commande, modifier l'état technique de l'installation (10),
dans lequel
- au moyen d'un dispositif (40) extérieur de demande à distance, on envoie un signal (FAS(AB)) de demande à distance à un dispositif (30) d'interface déposé avant le dispositif (20) de commande,
- le dispositif (30) d'interface contrôle si le signal (FAS(AB)) de demande à distance contient une instruction (AB) de demande, mise en mémoire comme admissible dans le dispositif (30) d'interface, de demande de données d'installation,
- si une instruction (AB) de demande mise en mémoire comme admissible est contenue dans le signal (FAS(AB)) de demande à distance, on achemine au dispositif (20) de commande cette seule instruction (AB) de demande contenue dans le signal de demande à distance et on bloque l'acheminement du signal (FAS(AB)) de demande à distance en tant que tel ou toutes autres instructions de commande, qui ne sont pas des instructions (AB) de demande mises en mémoire comme admissibles et sinon on supprime un acheminement de l'instruction (AB) de demande, et
- dans le cas d'une instruction (AB) de demande admissible, on transmet les données demandées au dispositif (40) extérieur de demande à distance.

12. Procédé suivant la revendication 11,
**caractérisé en ce que**
- avant l'acheminement de l'instruction (AB) de demande au dispositif (20) de commande, on transmet celle-ci par un module (350) extérieur d'interface du dispositif (30) d'interface d'abord à un module (30) intérieur d'interface du dispositif (30) d'interface et cela avec modification d'un protocole de paquet ou sur la base d'une transmission de signal sans paquet et
- on achemine l'instruction (AB) de demande du module (300) intérieur d'interface du dispositif (30) d'interface au dispositif (20) de commande.

13. Procédé suivant l'une des revendications 11 à 12 précédentes,
**caractérisé en ce que**
- le dispositif (30) d'interface est à deux étages ou à plusieurs étages et a deux ou plusieurs modules (300, 350) d'interface, qui sont montés les uns derrière les autres avec formation d'une cascade par des interfaces,
- en parallèle à au moins le dernier dans la cascade - considéré à partir du dispositif (40) de demande à distance - module (300) d'interface, donc celui qui est en liaison avec le dispositif (20) de commande, est monté en parallèle au dispositif (30) d'interface dans l'ensemble une diode (50) de données et la diode (50) de données est polarisée de manière à pouvoir envoyer des données en direction du dispositif (40) extérieur de demande à distance, et
- en présence d'une instruction (AB) de demande, on transmet les données (D) demandées par l'intermédiaire de la diode (50) de données et ainsi, en court-circuitant le module (300) d'interface relié au dispositif (20) de commande, le dispositif (30) d'interface dans l'ensemble, au dispositif (40) extérieur de demande à distance.

14. Procédé suivant l'une des revendications 11 à 12 précédentes,
**caractérisé en ce que**
- le dispositif (30) d'interface est à deux étages ou à plusieurs étages et a deux ou plusieurs modules (300, 350) d'interface, qui sont montés les uns derrière les autres avec formation d'une cascade par des interfaces,
- en parallèle à au moins le dernier module (300) d'interface dans la cascade - considéré à partir du dispositif (40) de demande à distance, donc au module (300) intérieur d'interface dans le cas de deux modules d'interface, est montée en parallèle au dispositif (30) d'interface dans l'ensemble une diode (50) de données et la diode (50) de données est polarisée de manière à pouvoir envoyer des données en direction du dispositif (40) extérieur de demande à distance, et
- en présence d'une instruction (AB) de demande, on transmet les données (D) demandées par l'intermédiaire de la diode (50) de données et en court-circuitant ainsi le module (300) intérieur d'interface relié au dispositif (20) de commande, dans le cas de deux modules d'interface le dispositif (30) d'interface, dans l'ensemble, au dispositif (40) extérieur de demande à distance.

15. Procédé suivant l'une des revendications 11 à 14 précédentes,
**caractérisé en ce que**
- pour effectuer une mise à jour logicielle, on signe un fichier de mise à jour logicielle et cela sur la base d'une ou de plusieurs signatures mises en mémoire comme valables dans le dispositif (30) d'interface,
- on transmet le fichier (SUD(sig)) signé de mise à jour logicielle au dispositif (30) d'interface,
- le dispositif (30) d'interface contrôle la présence sur le fichier (SUD(sig)) signé de mise à jour logicielle, la présence d'une ou de plusieurs signatures mises en mémoire comme valables, si le contrôle de signature est couronné de succès il effectue la mise à jour logicielle contenue dans le fichier (SUD(sig)) de mise à jour logicielle et si le contrôle de signature n'est pas couronné de succès, il s'abstient d'effectuer la mise à jour logicielle.
